# EUROPEAN PATENT APPLICATION

(11) **EP 0 973 055 A2**
(43) Date of publication of application: **19.01.2000**
(21) Application number: 99305467.5
(22) Date of filing: 09.07.1999
(51) Int. Cl.: G02B 26/12, G02B 7/182, G02B 26/08, H04N 1/113

(54) **Scanline bow adjustment**

(30) Priority: 16.07.1998 US 116717
(71) Applicant: XEROX CORPORATION, Rochester, New York 14644 (US)
(72) Inventor: Rauch, Russell B., Pasadena, California (US)
(74) Representative: Rackham, Stephen Neil

(57) **Abstract**

A mirror mount (100) adjusts the curvature of a cylindrical mirror (102), typically the wobble correction mirror, to adjust the scanline bow of an optical scanner. By adjusting the curvature of the cylindrical mirror (102) in the mirror mount, the scanline bows among multiple ROS's can be approximately equalized. The mirror mount (100) has two fixed abutments (116,118) on the upper edge (124) of the cylindrical mirror (102) and two moveable abutment points (120, 122) along the lower edge (126) of the mirror (102) . The mirror mount (100) adjusts the curvature of the cylindrical mirror (102) vertically for a horizontal beam to adjust the scanline bow for a single beam and approximately equalize the scanline bow for multiple beams.

## Description

This invention relates to the scanline bow in an optical scanning system and, more particularly, to an apparatus for adjusting the curvature of a cylindrical mirror, typically the wobble correction mirror, to adjust the scanline bow in an optical scanner or to approximately equalize the scanline bows in a multiple beam multiple optical scanning system.

A raster output scanner (or ROS) conventionally has a reflective multi-faceted polygon mirror that is rotated about its central axis to repeatedly scan a single intensity modulated beam across a photosensitive recording medium in the scan direction while the recording medium is being advanced in the cross scan direction. Typically, a laser generates the light beam and a modulator, such as an acousto-optic modulator, modulates the light beam in accordance with the input information to be reproduced on the recording medium. Alternately, the laser can produce a modulated beam directly. The beam scans the recording medium based on a raster scanning pattern. The scan direction is sometimes referred to as the fast scan direction while the cross scan direction is sometimes called the slow scan direction.

Both single beam and multiple beam raster output scanners are particularly useful for high speed printers or multiple color printers. An undesirable character of raster output scanners, however, is scanline bow.

For a ROS beam, bow distortions occur from the unavoidable imprecisions in the manufacture and mounting of the lenses and mirrors of the optical elements of the ROS. Scanline bow arises from the very nature of optical scanning systems, where the beam is offset in the cross-scan direction from the ideal horizontal straight line in the scan direction of the scan line on the recording medium. The scanline bow occurs because the magnification of the optical system of the ROS varies across the cross-scan direction as the beam propagates through the optical system.

Depending upon the accumulation of optical tolerances, the bow may bend in the middle of the scan line about a central mid-point in either cross-scan direction. A bow where the central mid-point is higher than the rest of the scan line is called a "frown" while a bow where the central mid-point is lower than the rest of the scan line is called a "smile".

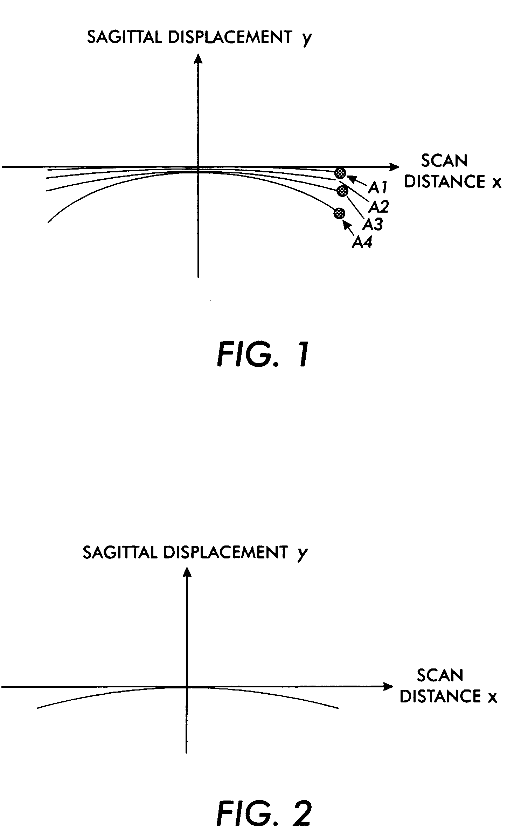

Moreover, the magnitude of the scanline bow varies from optical scanner to optical scanner. A multiple beam multiple optical scanner will produce a single beam from each ROS with each beam having a different scanline bow. As shown in Figure 1, the beams from the various raster output scanners will not line up at the edges of the scan lines. Ideally, after correction of the scanline bow, the beams will have the same bow (which could be near zero or at some constant value) as shown in Figure 2. In practice, the bows of each bow are matched as closely as possible to be approximately equal, even if the matching does not present a straight line.

One solution to the problem of differential bow in a multiple beam ROS is found in US-A-5,543,829. The solution applies pressure directly to the back and front surfaces of the mirror to adjust the curvature of the mirror horizontally. The pressure is applied at 4 horizontal abutment points with all four points being parallel to the mirror along the axis of the scan line of the light beam. Two points are on the back surface of the mirror and the other two points are on the front surface of the mirror. The pressure is applied to the four abutment points through a single horizontal set screw perpendicular to the back surface of the mirror parallel to the scan line of the light beam.

Differential bow arises from multiple beams from a single ROS. Scanline bow is a different problem. Scanline bow arises in both single and multiple beam ROS's and is the overall curvature of the scan line relative to the ideal of a straight scan line.

According to this invention a minor a mirror mount for a mirror for adjusting the curvature of a mirror to adjust the scanline bow in an optical scanning system, comprises:
a backing plate located behind a rear surface of said mirror, said backing plate having two fixed abutments for contacting the upper horizontal surface of said mirror, and
a bending device connected to said backing plate, said bending device having two moveable abutments for contacting the lower horizontal surface of said mirror, and adjustment means for moving said two moveable abutments to adjust the curvature of said mirror.

A mirror mount in accordance with the present invention, can be used to adjust the curvature of a cylindrical mirror, typically the wobble correction mirror, to adjust the scanline bow for an optical scanner. By adjusting the curvature of the cylindrical mirror in the mirror mount, the scanline bows among multiple ROS's can be approximately equalized. The mirror mount adjusts the curvature of the cylindrical mirror vertically for a horizontal beam to adjust the scanline bow for a single beam and approximately equalize the scanline bow for multiple beams.

A particular embodiment in accordance with this invention will now be described with reference to the accompanying drawings; in which:-
Figure 1 is a graph showing scanline bow versus scan distance for four beams before adjustment of scanline bow;
Figure 2 is a graph showing the ideal scanline bow versus scan distance for four beams after adjustment of scanline bow;
Figure 3 is a cross-sectional side view of the mirror mount for adjusting the curvature of a cylindrical mirror formed according to the present invention;
Figure 4 is a cross-sectional back view of the mirror mount and cylindrical mirror of Figure 3;
Figure 5 is a diagram showing the forces applied to the mirror by the mirror mount according to the present invention;
Figure 6 is a cross-sectional side view of the vertical displacement of the mirror resulting from the mirror mount formed according to the present invention; and,
Figure 7 is a graph showing the actual scanline bow versus scan distance for multiple beams after adjustment of scanline bow by the mirror mount formed according to the present invention.

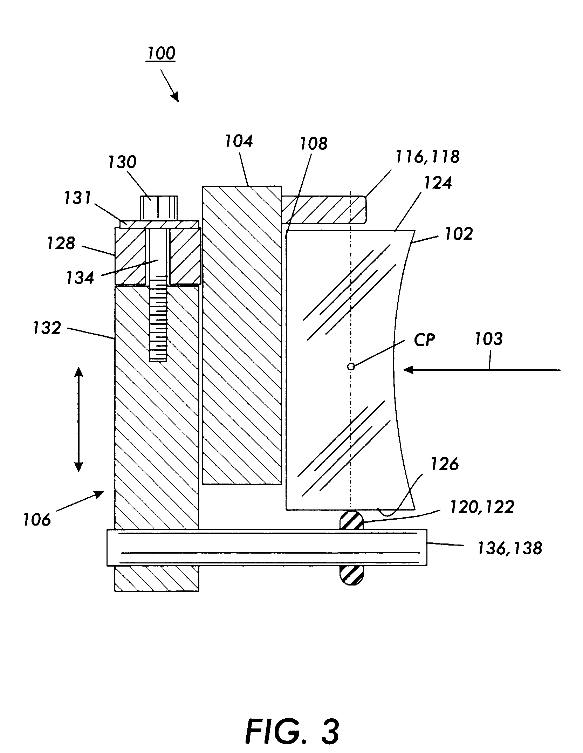

Reference is now made to Figure 3, wherein there is illustrated a mirror mount 100 for adjusting the curvature of a cylindrical mirror 102 in accordance with this invention. The cylindrical mirror 102 is typically the wobble correction mirror in the ROS. A light beam 103 will strike and be reflected from the cylindrical mirror horizontally as shown in the Figure.

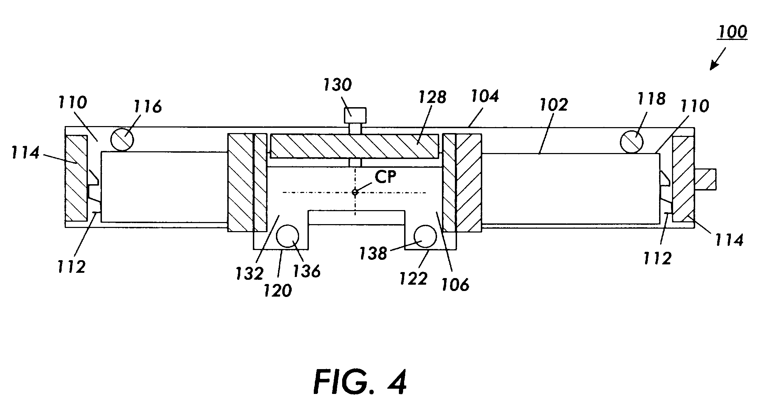

As shown in the side view of Figure 3 and the back view of Figure 4, the mirror mount 100 includes a backing plate 104 and a bending device 106 positioned at a center location of the mirror 102 along the rear surface 108 of the mirror 102 behind the mirror and between the horizontal ends 110 of the mirror. The mirror is flexibly secured at the horizontal ends 110 to the backing plate 104 by springs 112 attached to end crossbar clamps 114. The mirror is secured at the horizontal ends to avoid twisting along the long axis of the mirror but is capable of bending along its vertical axis, the amount of the bending being adjusted by the bending device along the center of the mirror.
The bending device 106 contacts and holds the mirror 102 preferably using abutments 116, 118, 120 and 122. The rear surface 108 of the mirror 102 has a central horizontal axis and a central vertical axis which intersect at a center point CP of the mirror 102. The two upper abutments 116 and 118 preferably contact the upper horizontal edge 124 of the mirror 102, equally spaced from the center point CP, on the same side of the horizontal axis but different sides of the vertical axis on the outer edge of the mirror. The two upper abutments 116 and 118 are connected to the backing plate 104. The two upper abutments are fixed in position.

The two lower abutments 120 and 122 preferably contact the lower horizontal edge 126 of the mirror 102, equally spaced from the center point CP, on the same side of the horizontal axis but different sides of the vertical axis on the inner edge of the mirror. The two lower abutments are moveable in position.

The two upper abutments are on opposite sides of the mirror and its horizontal axis from the two lower abutments. The two upper abutments are spaced farther along the edge of the mirror than the lower abutments which are closer to the center point CP and the vertical axis. The four abutments contact the mirror along the upper horizontal edge and the lower horizontal edge. The abutments 116, 118, 120 and 120 are preferably made of soft metal such as aluminum to prevent the mirror 102 from breaking when force is applied by the bending device 106 to adjust the curvature of the mirror 102.

The backing plate 104 is between the bending device 106 and the rear surface 108 of the mirror 102. The backing plate extends along the full rear surface of the mirror while the bending device is located around a center portion of the rear surface of the mirror. The bending device is preferably secured to the backing plate and allows movement of the bending device and the mirror relative to the backing plate.

The bending device is parallel and alongside the backing plate. A fixed bar 128 extends from the backing plate 104 above the bending device 106. The mirror mount 100 includes a setting screw 130 that is aligned with the vertical axis and the center point CP and extends through the fixed bar 128 of the backing plate 104 to a moveable cross-bar 132 of the bending device. The screw 130 is threaded through a threaded section 134 of the fixed bar 128 into the cross-bar 132. A washer 131 can be placed between the screw 130 and the fixed bar 128.

The cross-bar 132 is connected to lateral pins 136 and 138 which extend under the mirror 102. The pins 136 and 138 are parallel to the bottom surface 126 of the mirror 102. The lower abutment 120 extends form the lateral pin 136 to contact the lower horizontal edge 126 of the mirror 102. The lower abutment 122 extends form the lateral pin 138 to contact the lower horizontal edge 126 of the mirror 102.

Different angular rotations of the setting screw 130 cause the cross-bar 132 to move vertically in one direction which causes the lateral pins 136 and 138 to move and thus the two lower abutments 120 and 122 to move vertically in the opposite direction to the cross-bar. The setting screw and thus the abutments can move in both directions, up and down, vertically.

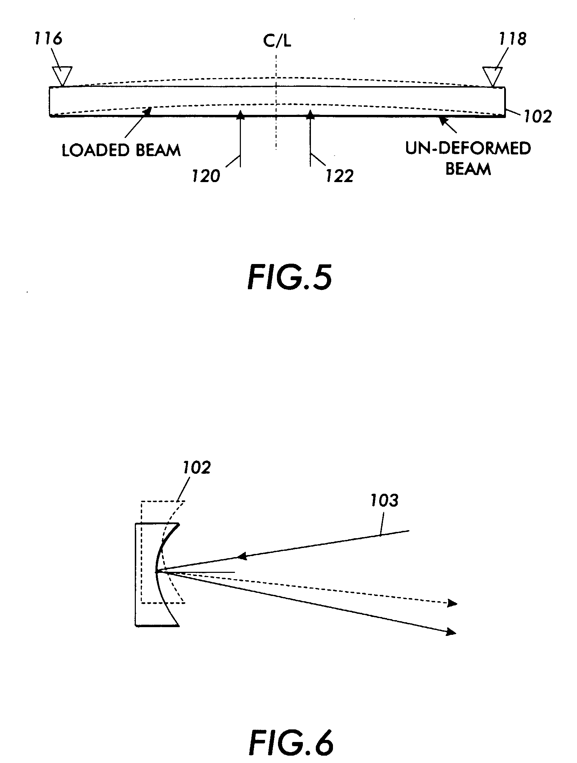

As best seen in the force diagram of Figure 5, the bending device 106 of the mirror mount is located around a center portion of the mirror 102 (i.e., the area near the center point CP). Thus, when the setting screw is appropriately adjusted, the bending device 106 applies a force through the two moveable lower abutments to the bottom edge of the mirror 102. These two abutments serve as load points and are symmetrically located about the vertical axis and because of the single set screw apply equal force to the mirror.

The top edge of the mirror is restrained by the two fixed upper abutments 116 and 118 along the outer edges of the upper edge. These two abutments serve as fulcrums and are symmetrically located about the vertical axis to apply equal force to the mirror.

The moveable load points are much closer to the vertical axis than the stationary fixed fulcrums.

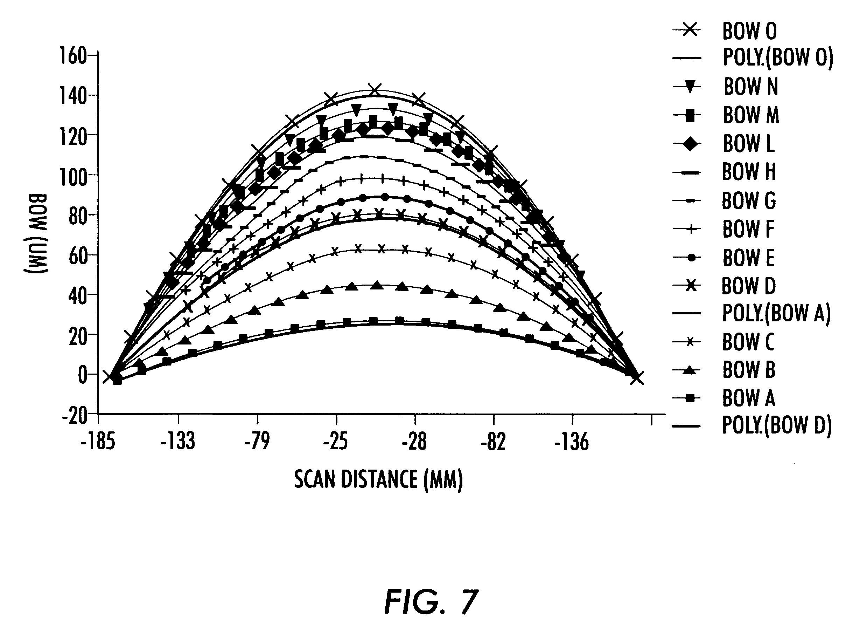

The force applied to the bottom middle edge of the mirror causes the mirror to be bent upward in the vertical axis and results in an adjustment of the curvature of the mirror 102 due to this bending of the vertical axis, as shown in Figure 6. That is, the position of the center point CP will move a certain distance vertically out of the plane defined by the horizontal ends of the mirror, to create a "bow" or "bend" in the mirror 102. Typical mirrors 102 are capable of easily being adjusted in sag by up to 2 mm, depending on the width and the length of the mirror. However, movements of only a fraction of a millimeter are sufficient to correct for scanline bow problems.
The bending device 106 of the mirror mount 102 preferably adjusts the curvature of the last mirror 102 in the optical path of a light beam 103, i.e. the wobble correction mirror in a raster output scanning system, before the light beam impinges on a photoreceptor. However, the present invention can be used with any mirror in the optical system.
The setting screw is preferably adjusted by a user after first determining the amount of scanline bow in an optical system. This can be done by first allowing a light beam to reflect from the mirror and scan onto a measuring system in place of the photoreceptor in the actual ROS system.. The scanline bow can then be determined and measured as is well-known in the art. The setting screw is then appropriately adjusted using the above described method and apparatus to correct for the scanline bow. The light beam is then reflected from the mirror and scanned across the photoreceptor with the compensated scanline bow introduced into the mirror. Again, the scanline bow is determined and measured. If necessary, the setting screw is then again adjusted until the scanline bow is substantially eliminated. This process is repeated for each of the beams in the multiple beam raster output scanning system. Other methods of determining the scanline bow are also within the scope of this invention.
Thus, scanline bow can be corrected by introducing a compensating scanline bow within the mirror 102 of the raster output scanning system using the above-described apparatus and method. As shown in the graph of Figure 7, the actual scanline bows of a beam (for various amounts of adjustment) remain parabolic and closely matched over the entire scanline after adjustment of scanline bow by the mirror mount formed according to the present invention. The invention of the present application approximately equalizes scanline bow for multiple beams from multiple ROS's with each individual ROS producing a single beam. The four abutments may be hemispherical or toroidal in shape to help avoid stress on the edge surfaces of the mirror.

The mirror mount 100 and the various elements of the backing plate 104 and the bending device 106 should be made of the same material as the mirror 102 or material having the same thermal expansion coefficient to avoid thermal drift of the mirror orientation and the resulting slight misalignment of the light beam.

## Claims

1. A mirror mount (100) for a mirror for adjusting the curvature of a mirror (102) to adjust the scanline bow in an optical scanning system, comprising
a backing plate (104) located behind a rear surface (108) of said mirror, said backing plate having two fixed abutments (116,118) for contacting the upper horizontal surface (124) of said mirror (102), and
a bending device (132,136,138) connected to said backing plate, said bending device having two moveable abutments (120,122) for contacting the lower horizontal surface (126) of said mirror (102), and adjustment means (130) for moving said two moveable abutments (120,122) to adjust the curvature of said mirror.

2. A mirror mount according to claim 1, wherein said adjustment means include a screw (130) extending through a portion of said backing plate (128) and into said bending device (132).

3. A mirror mount according to claim 1 or 2, wherein said two fixed abutments (116,118) are located farther from a vertical axis of said mirror (102) than said two moveable abutments (120,122).

4. A mirror mount according to any one of the preceding claims, wherein said bending device (132) extends along a central portion of said rear surface (108) of said mirror (102).

5. A mirror mount according to any one of the preceding claims, wherein the scanline bows of multiple beams from multiple optical scanning systems are adjusted to approximately equalize said scanline bows.

6. A mirror mount according to any one of the preceding claims, wherein said mirror (102) is a wobble correction mirror.
